Europäisches Patentamt

European Patent Office

Office européen des brevets

(11) Publication number: **0 429 222 A1**

## EUROPEAN PATENT APPLICATION

(21) Application number: 90312229.9

(22) Date of filing: 08.11.90

(51) Int. Cl.5: **C08G 77/38, C09D 183/06**

(30) Priority: 15.11.89 US 436578

(43) Date of publication of application:
29.05.91 Bulletin 91/22

(84) Designated Contracting States:
DE FR GB IT

(71) Applicant: **DOW CORNING CORPORATION**

**Midland Michigan 48686-0994(US)**

(72) Inventor: **Plueddemann, Edwin Paul**
**940 E. Pinecroft Lane**
**Midland, Michigan(US)**

(74) Representative: **Lewin, John Harvey et al**
**ELKINGTON AND FIFE Beacon House 113**
**Kingsway**
**London WC2B 6PP(GB)**

(54) U.V. Curable silicone coating compositions.

(57) The present invention relates to improved curable organosilicone resin coating compositions comprising the reaction product of an alkoxy-functional organopolysiloxane resin and a hydroxy-functional acrylic ester monomer in the presence of a stabilizer and a condensation catalyst. These compositions may be cured by exposure to ultraviolet (U.V.) radiation to provide moisture-resistant films and, upon the incorporation of certain adhesion promoters, the resulting films exhibit good adhesion to various substrates in wet environments.

## U.V. CURABLE SILICONE COATING COMPOSITIONS

The present invention relates to improved organo-silicone resin coating compositions which may be cured by exposure to ultraviolet (U.V.) radiation. More particularly, the present invention relates to compositions comprising the reaction product of an alkoxy-functional organopolysiloxane resin and a hydroxyl-functional acrylic ester monomer in the presence of a stabilizer and a condensation catalyst.

It has now been discovered that coating compositions may be formed by reacting, in the presence of a stabilizer and a condensation catalyst, certain alkoxy-functional silicone resins and certain acrylic monomers having both acryloxy (or methacryloxy) and hydroxyl functionality in the same molecule. These coating compositions may readily be cured by ultraviolet (U.V.) radiation by methods known in the art to form moisture resistant coatings. Furthermore, by the proper selection of specific adhesion promoters, the coating compositions can form water resistant bonds to various substrates. Accordingly, the need for the extra step of first preparing a hydroxyl group-containing resin, as in the case of Japanese Kokai No. 59-(1984)-92948, is eliminated.

The present invention therefore relates to a solventless silicone coating composition comprising a reaction product of

(I) an organopolysiloxane resin consisting essentially of about 20 to 80 mole percent $RSiO_{3/2}$ units and about 80 to 20 mole percent $R'_2SiO_{2/2}$ units, wherein R is selected from the group consisting of phenyl and chlorophenyl and R' is a monovalent hydrocarbon radical selected from the group consisting of alkyl radicals having 1 to 8 carbon atoms, trifluoropropyl and phenyl, said organopolysiloxane resin having alkoxy groups selected from the group consisting of methoxy, ethoxy and propoxy attached to the silicon atoms thereof, there being from about 0.5 to about 1 mole of residual alkoxy functionality per 100 parts by weight of said organopolysiloxane resin; and

(II) an acrylic ester monomer having in its molecule at least one acryl moiety selected from the group consisting of acryloxy and methacryloxy and at least one hydroxyl moiety selected from the group consisting of primary hydroxyl and secondary hydroxyl, the ratio of components (I) and (II) being such that the molar quantity of hydroxyl functionality provided by said acrylic ester (II) is approximately 60 to 100 percent of the molar quantity of alkoxy functionality provided by said organopolysiloxane resin (I), said reaction being carried out in the presence of

(III) a stabilizing amount of a stabilizer for the acrylic functionality of component (II); and

(IV) an effective amount of a condensation catalyst to promote the reaction of said alkoxy groups of (I) with said hydroxyl groups of (II).

The organopolysiloxane resin (1) of the present invention consists essentially of about 20 to 80 mole percent $RSiO_{3/2}$ units and about 80 to 20 mole percent $R'_2SiO_{2/2}$ units, wherein R is selected from the group consisting of phenyl and chlorophenyl and R' is a monovalent hydrocarbon radical selected from the group consisting of alkyl radicals having 1 to 8 carbon atoms, such as methyl, ethyl, propyl, butyl, pentyl, hexyl and octyl, trifluoropropyl and phenyl. The organopolysiloxane resin (I) additionally has alkoxy groups, selected from methoxy, ethoxy or propoxy, attached to the silicon atoms thereof, there being from about 0.5 to about 1 mole of residual alkoxy functionality per 100 parts by weight of said organopolysiloxane resin.

The preparation of alkoxy-functional organopolysiloxane resins is known in the art, some of these resins being available commercially. In brief, they maybe prepared from the corresponding organotrialkoxysilanes and diorganodialkoxysilanes by cohydrolysis in an acid environment. They may also be formed by first subjecting an organotrialkoxysilane to a limited water hydrolysis to obtain an alkoxy-functional resin oligomer which is subsequently reacted with a hydroxyl-terminated diorganopolysiloxane, the reaction preferably being catalyzed by an organometallic compound such as an organotitanate. They may further be prepared by first partially hydrolyzing a corresponding mixture of organotrichlorosilanes and diorganodichlorosilanes and subsequently alkoxylating the residual chloride functionality thereof with an alcohol.

Preferably, organopolysiloxane resin (I) is a liquid reaction product prepared by first hydrolyzing, and then neutralizing, an equilibrated mixture of (i) a phenylsilane and (ii) a polydimethylsiloxane, the equilibration reaction being facilitated by a strong acid catalyst (iii), as described infra.

Component (i) of the preferred organopolysiloxane resin (I) may be represented by the formula

$PhSi(OR'')_3$

wherein Ph hereinafter denotes a phenyl radical and R'' is selected from the group consisting of methyl, ethyl and propyl radicals. It is further preferred that R'' is either a methyl or ethyl radical and it is particularly preferred that component (i) is phenyltrimethoxysilane.

The polydimethylsiloxane (ii) of the preferred organopolysiloxane resin (I) may be a linear polydimethylsiloxane. The selection of terminal groups for the linear polydimethylsiloxane is not critical for the purpose of the present invention provided that an inert terminal group, such as trimethylsilyl, is not employed when the degree of polymerization of the polydimethylsiloxane is less than about 200. Thus, generic examples of suitable terminal groups include trialkylsilyl, alkoxydialkylsilyl, aryldialkylsilyl and hydroxydialkylsilyl groups. Specific terminal groups which may be used include $Me_3Si-$, $MeO(Me_2)Si-$ and $HO(Me_2)Si-$, wherein Me hereinafter denotes a methyl radical. Preferably, the end group is $HO(Me_2)Si-$.

Although component (ii) is described as a polydimethylsiloxane, up to about 10 mole percent of siloxane units containing alkyl groups having 2 to 8 carbon atoms, phenyl groups or trifluoropropyl groups may be copolymerized with the dimethylsiloxane units. Thus, copolymers of dimethylsiloxane units with phenylmethylsiloxane, methylhexylsiloxane or methyltrifluoropropylsiloxane units are specific examples of this component. It is preferred that when component (ii) is a linear polydimethylsiloxane, that it be the dimethyl homopolymer.

Alternatively, and preferably, polydimethylsiloxane (ii) is selected from at least one polydimethyl-cyclosiloxane having the formula

$$(Me_2SiO)_x$$

wherein x is an integer between 3 and about 10, inclusive. For the purposes of the present invention, this preferred polydimethylsiloxane is a mixture of such cyclic siloxanes.

Component (iii) of the preferred organopolysiloxane resin (I) is a strong acid capable of efficiently redistributing (i.e., equilibrating) siloxane bonds. It has been observed that weak acids, such as phosphoric or acetic, do not redistribute siloxane bonds and therefore do not produce the organopolysiloxane resins of the present invention. Suitable acids are represented by the general formula $ZSO_3H$ wherein Z is a perfluoroalkyl group having 1 to about 10 carbon atoms. Examples of suitable acid catalysts include perfluoromethane sulfonic acid, perfluoroethane sulfonic acid, perfluorohexane sulfonic acid, perfluorooctane sulfonic acid and perfluorodecane sulfonic acid. It is preferred that component (iii) is perfluoromethane sulfonic acid.

In order to prepare the preferred organopolysiloxane resin (I), phenylsilane (i) and polydimethylsiloxane (ii) are mixed in a mole ratio of 1:4 to 4:1 and reacted in the presence of an equilibrating amount of catalyst (iii). The reaction is carried out under an inert atmosphere, such as nitrogen or argon, and the preferred mole ratio of components (i) to component (ii) is 1:2 to 2:1. The term "equilibrating amount" as used herein denotes a sufficient amount of acid catalyst (iii) to efficiently rearrange the siloxane bonds of reactants (i) and (ii) so as to provide a substantially equilibrated product of reaction within 3-5 hours at temperatures between about 60 and $80^\circ$ C. This amount may readily be determined by those skilled in the art by following the disappearance of the reactants using, e.g., gas chromatography, the acid in the sample being neutralized before each such determination. Thus, for example, when the catalyst is the preferred perfluoromethane sulfonic acid, it is employed at about 0.04 to 0.1 weight percent of the total of components (i) and (ii). This amount of perfluoromethane sulfonic acid is sufficient to equilibrate the above mentioned components within about 4 hours at $70^\circ$ C.

After equilibration of components (i) and (ii) is attained, the reaction product is hydrolyzed with sufficient water to provide from about 0.5 to about 1 mole of residual $-OR''$ functionality per 100 parts by weight of the preferred organopolysiloxane resin (I). As should be apparent to the skilled artisan, the molar units and weight units must, of course, be consistent (e.g., gram-moles and grams, respectively). The basic reactions relied upon to calculate the amounts of water to be used in the hydrolysis step are: (1) the hydrolysis of the -OR groups on the above described equilibrated product to form silanol groups; and (2) condensation of the silanol groups to form siloxane bonds. The net effect of these reactions, assuming the complete condensation of all silanol groups formed, requires the employment of one half mole of water for the hydrolysis of each mole of $-OR''$ groups. Using this assumption, in combination with the above mentioned range of the ratio of the polydimethylsiloxane to the phenylsilane, one skilled in the art can readily calculate the approximate amounts of the ingredients to be used in forming compositions having from about 0.5 to about 1 mole of residual $-OR''$ functionality per 100 parts by weight of said organopolysiloxane resin (I). In practice, it has been found that, when $-OR''$ is methoxy, the calculated (i.e., theoretical) methoxy content is usually close to the analytically determined value thereof. Preferably, when $-OR''$ is methoxy, the final organopolysiloxane resin (I) has from about 0.5 to 0.65 moles of residual methoxy functionality per 100 parts by weight of the preferred organopolysiloxane resin (I). The hydrolysis step may be carried out at temperatures between about 18 and $70^\circ$ C., but preferably below the boiling point of the alcohol (e.g., MeOH) formed during the hydrolysis. This reaction should be carried out for at least one hour, whereupon the reactants are preferably heated to reflux and the alcohol formed is removed by distillation. Finally, the acid catalyst is neutralized and the product stripped under vacuum to remove the remaining alcohol byproduct as well as other impurities. The product is then cooled and filtered.

The acrylic ester (II) of the present invention is an acrylic ester monomer having in its molecule at least

3

one acryl moiety selected from the group consisting of acryloxy and methacryloxy and at least one hydroxyl moiety selected from the group consisting of primary hydroxyl and secondary hydroxyl. The acryl and hydroxyl moieties are attached to the acrylic ester molecule through a polyvalent (e.g., divalent, trivalent, tetravalent) organic connecting group. The nature of this connecting group is not critical for the purposes of the present invention, the only limitation being that it is chemically inert and does not interfere with the reaction between (I) and (II) or with subsequent applications of the compositions. It is preferred that this connecting group is a hydrocarbyl group containing from 2 to about 6 carbon atoms, such as methylene, dimethylene, trimethylene, isobutylene and hexamethylene. It is further preferred that the hydroxyl groups are primary hydroxyls.

Specific examples of suitable acrylic esters include hydroxyethyl acrylate, hydroxyethyl methacrylate, hydroxypropyl acrylate, hydroxypropyl methacrylate, 1,6-hexanediol monoacrylate, 1,4-butanediol monoacrylate, diethylene glycol monoacrylate, neopentyl glycol monoacrylate, 1,4-butanediol monomethacrylate, 1,3-butylene glycol monoacrylate, trimethylolpropane diacrylate, trimethylolpropane dimethacrylate, pentaerythritol monohydroxy triacrylate, dipentaerythritol (monohydroxy) pentaacrylate and the like.

It is preferred that component (II) is selected from hydroxyethyl acrylate, hydroxyethyl methacrylate, hydroxypropyl methacrylate or pentaerythritol monohydroxy triacrylate. These compounds are well known in the art and many of them are commercially available.

The coating compositions of the present invention are prepared by reacting a mixture of components (I) and (II) in a ratio such that the molar quantity of hydroxyl functionality provided by said acrylic ester (II) is approximately 60 to 100 percent of the molar quantity of alkoxy functionality provided by said organopolysiloxane resin (I). When this ratio is such that less than about 60% of the stoichiometric hydroxyl functionality is used, it has been found that resulting coatings do not consistently exhibit satisfactory moisture resistance. On the other hand, since the class of acrylic esters employed herein is generally of a toxic nature, it is preferred that a slight excess of the organopolysiloxane resin (I) is used so as to minimize residual component (II). Thus, an approximately 10% excess of alkoxy groups over the stoichiometric amount is highly preferred.

The above reaction is carried out at temperatures of about 100 to 150°C. in the presence of a stabilizer (III) for the acrylic functionality of the acrylic ester and an effective amount of a condensation catalyst (IV) to promote the reaction of the alkoxy groups of (I) with the hydroxyl groups of (II). Removal of the byproduct alcohol formed during the reaction (e.g., by distillation) serves to drive the reaction to completion as well as to provide a quantitative indication of the extent of reaction. Thus, for example, when no more alcohol byproduct is distilled overhead, the reaction is considered essentially complete.

For the purposes of the present invention, stabilizer (III) may be selected from any of the compounds known in the art to prevent the thermal polymerization of the acrylic or methacrylic functionality of acrylic ester (II) under the conditions of the reaction, described infra. When this reaction is carried out in the presence of oxygen, suitable stabilizers include compounds such as the monomethylether of hydroquinone (MEHQ), 4-tert-butylcatechol, 2,6-dibutyl-4-methylphenol, hydroquinone, butylated hydroxytoluene, p-aminophenol, cupric chloride, cupric acetate, methylene blue and the like. Likewise, stabilizers which operate under inert conditions (e.g., nitrogen purge) include such compounds as phenothiazine (PTZ), diphenylphenylenediamine (DPPD), di-beta-napthyl-para-phenylenediamine and mixtures of 2,6-di-tert-butyl-p-cresol with phenothiazine. It is preferred that component (III) is selected from the hydroxylamine compounds described in United States Patent No. 4,798,889 to Plueddemann and Bank. A particularly preferred stabilizer of this type is diethylhydroxylamine. Typically, from about 0.01 to 1.0 part by weight of stabilizer (III) is used for each 100 parts of the combined weights of components (I) and (II).

The catalyst (IV) of the present invention may be selected from any of the compounds which are known to facilitate the condensation reactions between the alkoxy groups of the organopolysiloxane resin (I) and the hydroxyl groups of the acrylic ester (II). For example, the compounds contemplated may be acids, such as hydrochloric, sulfuric and trifluoroacetic; bases, such as alkoxides of sodium and potassium, such as sodium methoxide, sodium butoxide and potassium propoxide; and active organometallic catalysts, such as organotitanates, organozirconates and alkoxy aluminum. Preferred catalysts include tetrabutyl titanate and tetraisopropyl titanate. Typically, from about 0.5 to 1 part by weight of the catalyst is used for each 100 parts of the combined weights of components (I) and (II).

It has been found that, when the acryl moiety of the acrylic ester (II) is selected from methacryloxy functionality, the compositions of the present invention must further comprise an acryl-type crosslinker suitable for use in acrylic resin formulations. These materials are well known in the art and may be included during the above described reaction or they may be added afterward, but before curing the compositions by exposure to U.V. radiation. If such a crosslinker is omitted from the final coating composition, the

4

composition will not cure satisfactorily. These crosslinkers have at least two acrylate groups per molecule and a molecular weight less than about 4,000. When used in this way, the crosslinkers are typically present in amounts of from about 2 to about 33 weight percent of the total composition. Preferably, they are employed in an amount of at least 5 to 20 weight percent of the total composition. Examples of such crosslinkers include trimethylolpropane triacrylate, pentaerythritol tetraacrylate, ethoxylated trimethylolpropane triacrylate, pentaerythritol acrylate (containg three acrylate groups), di-trimethylolpropane tetraacrylate, trimethylolpropane triacrylate and di-pentaerythritol monohydroxy pentaacrylate, inter alia. These acrylate esters are available commercially and are usually sold with an inhibitor present. Preferred acrylate ester crosslinkers are those having at least three acrylate groups per molecule of which di-pentaerythritol monohydroxy pentaacrylate is the preferred species.

As stipulated above, it is preferred that there be about a 10% excess of the alkoxy functionality provided by the organopolysiloxane resin (I) over the total hydroxyl functionality of the acrylic ester (II) and any acryl-type crosslinker used. Moreover, addition of one or more of the above mentioned crosslinkers to the compositions of the present invention may also be used to augment the hardness of coatings which result when the compositions are cured by U.V. radiation.

Preferred embodiments of the present invention utilize the above described preferred organopolysiloxane resin (I) containing methoxy functionality wherein the phenyl/dimethyl ratio is in the range of 1:2 to 2:1, on a molar basis. This component (I) is reacted with an acrylic ester (II) selected from the group consisting of hydroxyethyl acrylate, hydroxyethyl methacrylate, hydroxypropyl methacrylate and pentaerythritol monohydroxy triacrylate. The quantities of these reactants are selected so as to provide approximately a 10% excess of methoxy functionality over hydroxyl functionality and the reaction is carried out in the presence of about 0.1 to 1 weight percent diethylhydroxylamine and about 0.5 to 1 weight percent tetrabutyl titanate, based on the combined weights of components (I) and (II).

The compositions of the present invention may further be compounded with various tinting agents, thermal stabilizers, flow agents and other additives commonly employed in the formulation of U.V.-curable coating compositions.

It is particularly preferred to add an adhesion promoter to the compositions of the present invention before they are cured. The adhesion promoters which are most useful in this regard may be selected from disilyl compounds having the general structure $(R''O)_3Si-A-Si(OR'')_3$ wherein $R''$ has its above defined meaning and A is a divalent hydrocarbyl group having 2 to 3 carbon atoms. A highly preferred compound of this sort is $(MeO)_3SiCH_2CH_2Si(OMe)_3$. Alternatively, the adhesion promoter may be selected from reaction products of the above mentioned disilyl compounds and the acrylic ester (II) of the present invention. These products may be prepared in a manner similar to that used to react components (I) and (II). Thus, a mixture of one of the disilyl compounds and one of the acrylic esters is reacted at about 110 to 130°C. in the presence of a stabilizer and condensation catalyst and the byproduct alcohol is distilled off.

As before, the quantity of the acrylic ester (II) is adjusted to provide hydroxyl functionality of about 60 to 100% of the stoichiometric equivalence of the alkoxy functionality of the disilyl compound, a value of 90% being preferred. Preferred adhesion promoters of this type are the reaction products of $(MeO)_3SiCH_2CH_2Si-(OMe)_3$ with hydroxyethyl acrylate or hydroxyethyl methacrylate.

The coating compositions of the present invention may be cured by exposure to ultraviolet radiation, as practiced in the art with other systems having acrylic-type functionality. Typically, a photoinitiator is mixed with the coating composition and this combination is coated onto a substrate such as metal, glass, mineral, plastic or paper. The coated substrate is then irradiated with U.V. light for a time sufficient to crosslink the film. As in any U.V. cure operation, the depth of cure possible is limited by the relative transparency of the coating composition to the light energy. The photoinitiators suitable in this regard are well known, specific examples being 2-hydroxy-2-methyl-1-phenylpropan-1-one, 4-methyl-7-(N,N-diethylamino)-coumarin, 2-methyl-1-[4-(methylthio)phenyl]-2-morpholenopropanone, 2,2-diethoxyacetophenone, benzoin methyl ether, benzoin ethyl ether, benzoin isopropyl ether, alpha-methylbenzoin, alpha- ethylbenzoin, alpha-methyl benzoin methyl ether, alpha-phenylbenzoin, alpha-allylbenzoin, anthraquinone, methylanthraquinone, ethylanthraquinone, tertiarybutylanthraquinone, benzil, diacetyl, benzaldehyde, acetophenone, benzophenone, omega-benzoin, 2,3-pentanedione, hydroxycyclohexylphenyl ketone, hydroxymethyl phenylpropanone and xanthone.

The photoinitiator is generally used in amounts of from 0.2 to 10 weight percent of the composition to facilitate the cure of the composition when it is exposed to ultraviolet radiation. The preferred photoinitiator is 2-hydroxy-2-methyl-1-phenylpropan-1-one and the preferred amount is from 4 to 8 weight percent of the composition.

In use, the compositions of the present invention further containing a photoinitiator may be applied to various substrates by any of the conventional coating techniques, such as spraying, dipping, brushing or by

5

the use of a doctor blade and subsequently cured thereon by exposure to U.V. light.

The U.V. curable silicone coating compositions of the present invention find utility in the preparation of protective coatings for metal, glass and plastic substrates, corrosion resistant high temperature paints, release coatings for bakeware, binders for masonry water repellant, decorative topcoat for appliances and tanks and protective coatings for circuit boards and silicon chips, inter alia.

The following examples are presented to further illustrate the compositions of the present invention, but are not to be construed as limiting the invention, which is delineated in the appended claims. All parts and percentages in the examples are on a weight basis and measured properties were obtained at 25° C., unless indicated to the contrary.

The following materials were employed in the preparation of the illustrative examples:

RESIN 1 - A liquid silicone resin was prepared by mixing under a nitrogen purge 78 parts of phenyltrimethoxysilane and 14 parts of a mixture of polycyclosiloxanes having the formula $(Me_2SiO)_x$, wherein Me hereinafter denotes a methyl radical and x had a value between 3 and 10. The mixture was stirred and 0.05 parts of trifluoromethane sulfonic acid was added. The catalyzed mixture was then slowly heated to 70° C. and stirred at this temperature for about 4 hours. Upon cooling to about 34° C., 6.8 parts of deionized water was added. The resulting exothermic reaction brought the temperature of the mixture to about 70° C. Stirring was continued for about another hour without further application of heat. Powdered calcium carbonate (0.3 part) was added to neutralize the acid catalyst and a vacuum (about 40 mm Hg) was applied while slowly heating to about 156° C. This temperature was held for about 4 hours to strip off volatiles. The product was cooled and filtered using Celite filter aid. It had a residual methoxy functionality of about 17% (i.e., 0.55 moles -OMe per 100 grams of the liquid resin.

RESIN 2 - A solid, hydroxy-functional silicone resin consisting essentially of $PhSiO_{3/2}$ units and $PrSiO_{3/2}$ units in a molar ratio of 7:3, respectively, wherein Ph and Pr hereinafter denote phenyl and n-propyl radicals, respectively. The resin was prepared by the hydrolysis of the respective chlorosilanes and contained about 6% hydroxyl groups.

SILANE 1 - An alkoxy functional silethylene consisting essentially of the structure $(MeO)_3SiCH_2CH_2Si(OMe)_3$.

SILANE 2 - A reaction product consisting essentially of an approximately equimolar mixture of said SILANE 1 and hydroxyethyl acrylate. The reaction was conducted at about 120° C. for about 0.5 hour in the presence of 1% tetra(n-butyl) titanate. The byproduct of this reaction, methanol, was distilled off.

SILANE 3 - A reaction product consisting essentially of an approximately equimolar mixture of said SILANE 1 and hydroxyethyl methacrylate. The reaction was conducted at about 120° C. for about 0.5 hour in the presence of 1% tetra(n-butyl) titanate. The byproduct of this reaction, methanol, was distilled off.

TBT Tetra(n-butyl) titanate.

DARACURE 1173 - A photoinitiator consisting essentially of 2-hydroxy-2-methyl-1-phenylpropan-1-one.

U.V. curable silicone compositions were prepared by reacting RESIN 1 with hydroxy functional acrylates in the presence of TBT catalyst and diethyl hydroxylamine stabilizer, as described infra. Reaction was carried out at about 150° C. while distilling off methanol byproduct. Each of the products of these reactions was mixed with 3% DARACURE 1173 to form a U.V. curable coating composition. These coating compositions were applied to glass and/or metal substrates and cured thereon to a tack-free condition by a single pass under a medium pressure mercury vapor lamp U.V. source. In each case, the total ultraviolet irradiation dose was 128 $mJ/cm^2$, as measured with an Optical Associates, Inc. U.V. power meter using a 365 nm probe.

Example 1

One hundred parts of RESIN 1 (0.55 mole -OMe groups) were reacted with 30 parts of hydroxyethyl acrylate (about 0.26 mole hydroxyl groups) and 70 parts of pentaerythritol triacrylate (about 0.23 mole hydroxyl groups) in the presence of 1.5 parts of TBT catalyst and 0.1 part $Et_2NOH$, in which Et hereinafter denotes an ethyl radical. The reaction product was coated onto a glass substrate and cured, as described above. The resulting clear film showed no indication of blushing (i.e., whitening) when soaked in 70° C. water for one day.

Example 2

One hundred parts of RESIN 1 were reacted with 58 parts of hydroxyethyl acrylate (about 0.5 mole hydroxyl groups) in the presence of 1.5 parts of TBT catalyst and 0.1 part $Et_2NOH$. The resulting clear fluid was cured after the addition of DARACURE 1173 to tough, flexible films that remained clear after soaking in water, but had poor adhesion to glass or metal.

## Example 3

One hundred parts of RESIN 1 were reacted with 33 parts of hydroxyethyl methacrylate (about 0.25 mole hydroxyl groups) in the presence of 1.3 parts of TBT catalyst and 0.1 part Et$_2$NOH. In this case, the reaction temperature was 160°C. A mixture of 3 parts of the above reaction product with 1 part of dipentaerythritol monohydroxy pentaacrylate was cured as in Example 2 to yield very hard, clear films that did not blush in warm water.

## Example 4

One hundred parts of RESIN 1 were reacted with 76 parts of pentaerythritol triacrylate in the presence of 1.8 parts of TBT catalyst and 0.2 part Et$_2$NOH. In this case, instead of distilling off methanol byproduct, a vacuum (water aspirator) was applied for 5 minutes as the mixture was reacted at 150°C. to recover 164 parts of a clear, oily product. When this composition was cured on glass, as described above, a very hard, clear film was obtained. The film did not blush in warm water, but had poor wet adhesion to glass.

## Example 5

Example 2 was repeated using approximately half the theoretical hydroxyethyl acrylate (33 part per 100 parts of RESIN 1). The resulting cured film was soft and flexible and had poor adhesion to glass. This soft film turned white (blushed) in warm water.

The coating composition used in above Example 5 was subsequently modified by mixing 2 parts thereof with 1 part of di-trimethylolpropane tetraacrylate and curing on glass, as before. This time, hard films having good initial adhesion to glass, but poor wet adhesion, resulted.

None of the above described unmodified U.V. cured films retained adhesion to glass after soaking in water for one day, even though they remained clear. However, as shown in the following table, addition of the adhesion promoters (SILANE 1, SILANE 2 or SILANE 3) significantly augmented this adhesion.

| Wet Adhesion of U.V.-cured Silicones to Glass | | |
|---|---|---|
| Example | Adhesion Promoter | Addhesion (after 1 day water soak at room temperature) |
| 1 | none | fair |
| | 1% SILANE 1 | excellent |
| | 1% SILANE 2 | excellent |
| | 1% SILANE 3 | good |
| 2 | none | very poor |
| | 5% SILANE 2 | poor |
| | 5% SILANE 3 | poor |
| 3 | none | poor |
| | 2% SILANE 1 | excellent |

In the above table, adhesion was judged according to the following criteria, wherein adhesion was determined by prying or scraping the films from the glass substrates using a razor blade:

| Rating | Observation |
|---|---|
| nil | Fell off (Dry) or Floated free of glass slide (Wet) (adhesive failure). |
| poor | 90° peel strength less than 1 pound/inch$^2$ |
| fair | Could be removed in one piece with razor blade (adhesive failure). Peel strength = 1 to 5 lb/in$^2$ |
| good | Could be pried off in pieces (adhesive and cohesive failure). |
| excellent | Could not be removed from glass (cohesive failure) |

Example 6

A room temperature blend of 100 parts of RESIN 1, 75 parts pentaerythritol triacrylate, 5 parts DARACURE 1173 and no TBT catalyst was coated onto a glass substrate and passed under a U.V. source, as described above. This procedure resulted in a hazy film having an oily surface. The film disintegrated when soaked in water. This experiment illustrates the necessity of pre-reacting at least part of the hydroxyl functional acrylate with the resin.

Example 7

A mixture of 200 parts of RESIN 2, 100 parts hydroxypropyl acrylate and 75 parts pentaerythritol triacrylate was warmed to dissolve RESIN 2. To this mixture, there was added 3% DARACURE 1173 and a coating thereof on a glass substrate was cured by U.V. radiation, as described above. The resulting film was hard and hazy. It turned increasingly hazy in boiling water, but did not disintegrate.

Example 8

One hundred parts of RESIN 1 (0.54 mole -OMe groups) were reacted with 33 parts of hydroxyethyl methacrylate (about 0.26 mole hydroxyl group) in the presence of 1.3 parts of TBT catalyst and 0.1 part $Et_2NOH$. The reaction mixture was heated to 160° C. while distilling off methanol to obtain a residue of 120 parts of a yellow oil. To 15 parts of this coating composition, there was added 5 parts of dipentaerythritol pentaacrylate and 0.6 parts DARACURE 1173. Films on glass and stainless steel substrate were cured by exposure to U.V. radiation, as before. An additional post-cure of 30 minutes at 100° C. resulted in clear, hard films that did not blush in water, but did lose adhesion when so submerged.

The coating composition of Example 8 was mixed with 1% of SILANE 1. This modified coating composition was similarly applied to substrates and cured thereon. Clear, hard films were obtained; they retained adhesion after soaking in water for 4 days.

## Claims

1. A composition comprising: a reaction product of
(I) an organopolysiloxane resin consisting essentially of about 20 to 80 mole percent $RSiO_{3/2}$ units and about 80 to 20 mole percent $R'_2SiO_{2/2}$ units, wherein R is selected from the group consisting of phenyl and chlorophenyl and R' is a monovalent hydrocarbon radical selected from the group consisting of alkyl radicals having 1 to 8 carbon atoms, trifluoropropyl and phenyl, said organopolysiloxane resin having alkoxy groups selected from the group consisting of methoxy, ethoxy and propoxy attached to the silicon atoms thereof, there being from about 0.5 to about 1 mole of residual alkoxy functionality per 100 parts by weight of said organopolysiloxane resin; and
(II) an acrylic ester monomer having in its molecule at least one acryl moiety selected from the group consisting of acryloxy and methacryloxy and at least one hydroxyl moiety selected from the group consisting of primary hydroxyl and secondary hydroxyl, the ratio of components (I) and (II) being such that the molar quantity of hydroxyl functionality provided by said acrylic ester (II) is approximately 60 to 100 percent of the molar quantity of alkoxy functionality provided by said organopolysiloxane resin (I), said reaction being carried out in the presence of
(III) a stabilizing amount of a polymerization stabilizer for the acrylic functionality of component (II); and
(IV) an effective amount of a condensation catalyst to promote the reaction of said alkoxy groups of (I) with said hydroxyl groups of (II).
2. The composition according to claim 1, wherein said organopolysiloxane resin (I) is prepared by
(A) reacting a mixture consisting essentially of
(i) a phenylsilane having the general formula
$PhSi(OR'')_3$
wherein R'' is selected from the group consisting of methyl, ethyl and propyl radicals and Ph denotes a phenyl radical,
(ii) a polydimethylsiloxane and
(iii) an equilibrating amount of an acid catalyst having the formula
$ZSO_3H$
wherein Z is a perfluoroalkyl group having 1 to 10 carbon atoms, the molar ratio of said polydimethylsiloxane (ii) to said phenylsilane (i) being between about 1:4 and about 4:1,
(B) hydrolyzing the reaction product formed in step (I) with sufficient water to provide from about 0.5 to about 1 mole of residual -OR$''$ functionality per 100 parts by weight of said organopolysiloxane resin (I) and (C) neutralizing said acid catalyst (iii).

3. The composition according to claim 1, further comprising an adhesion promoter selected from the group consisting of a disilyl compound having the general structure
$(R''O)_3 Si$-A-$Si(OR'')_3$
wherein $R''$ is an alkyl radical selected from the group consisting of methyl, ethyl and propyl and A is a divalent hydrocarbyl group having 2 to 3 carbon atoms and reaction products of said disilyl compound with said acrylic ester (II).

4. The composition according to claim 2, further comprising an adhesion promoter selected from the group consisting of a disilyl compound having the general structure $(R''O)_3 Si$-A-$Si(OR'')_3$ wherein $R''$ is an alkyl radical selected from the group consisting of methyl, ethyl and propyl and A is a divalent hydrocarbyl group having 2 to 3 carbon atoms and reaction products of said disilyl compound with said acrylic ester (II).

5. An article comprising a solid substrate coated with the composition of claim 1.

6. An article comprising a solid substrate coated with the composition of claim 2.

European
Patent Office

EUROPEAN SEARCH
REPORT

Application Number

EP 90 31 2229

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X,Y | FR-A-2 023 505   (FORD (FRANCE)<br>* claims 1-6, 51-53 * * exemples 1, 2, 4-10, 14-16 *<br>– – – | 1,5,1-6 | C<br>08 G 77/38<br>C 09 D 183/06 |
| P,Y | US-A-4 929 703   (DOW CORNING CORPORATION)<br>* claims 1-8 * * column 3, line 16 - column 5, line 35 *<br>– – – | 1,2,4-6 | |
| Y | US-A-4 824 875   (DOW CORNING CORPORATION)<br>* claims 1, 4, 6, 9-10 * * column 5, lines 20 - 60 *<br>– – – | 1,3,4 | |
| A | EP-A-0 223 600   (SHIN-ETSU CHEMICAL CO., LTD.)<br>* claims * * page 3, lines 34 - 65 * * page 6, lines 1 - 31 *<br>– – – | 1,5 | |
| A | US-A-4 528 081   (LOCTITE CORPORATION)<br>* claims *<br>– – – – – | 1-4 | |

TECHNICAL FIELDS
SEARCHED (Int. Cl.5)

C 08 G
C 09 D
C 08 K
C 08 L
C 08 F

The present search report has been drawn up for all claims

| Place of search | Date of completion of search | Examiner |
|---|---|---|
| The Hague | 25 February 91 | HOLLENDER C.J.F. |